# EUROPEAN PATENT APPLICATION

(11) **EP 4 645 643 A1**
(43) Date of publication of application: **05.11.2025**
(21) Application number: 25172997.6
(22) Date of filing: 28.04.2025
(51) Int. Cl.: H02J 7/00

(54) **ENERGY STORAGE SYSTEM**

(30) Priority: 29.04.2024 CN 202410534030
(71) Applicant: Xiamen Ampack Technology Limited, Xiamen City, Fujian Province, 361000 (CN)
(72) Inventor: GAO, Ming, Xiamen City, Fujian Province, 361000 (CN); FU, Ziyue, Xiamen City, Fujian Province, 361000 (CN)
(74) Representative: Icosa

(57) **Abstract**

An energy storage system includes: a plurality of battery modules connected in series, where each battery module includes at least two cell modules and a first cell monitoring unit, and, in each battery module, adjacent cell modules are electrically connected by a busbar, and the busbar is electrically connected to one first cell monitoring unit; a controller, communicatively connected to the first cell monitoring unit; and a shunt resistor, disposed on a main circuit of the energy storage system. The shunt resistor is electrically connected to the controller.

## Description

### TECHNICAL FIELD

This application relates to the technical field of battery management, and in particular, to an energy storage system.

### BACKGROUND

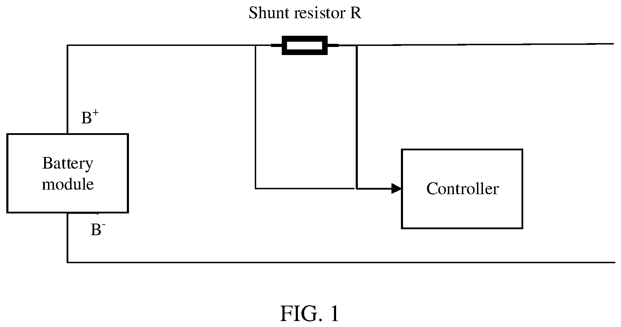

An energy storage system is connected to an external device to enable charging and discharging operations. In order to ensure the safety and reliability of the energy storage system, the system current of the energy storage system needs to be collected. A shunt resistor is disposed on a main circuit of the energy storage system. The shunt resistor is connected to a controller. The current of the energy storage system is collected by the shunt resistor. As shown in FIG. 1, a battery module of the energy storage system includes a positive electrode B⁺ and a negative electrode B⁻. The shunt resistor R is disposed in the main circuit of the energy storage system. The system current of the energy storage system is collected by the shunt resistor.

### SUMMARY

An objective of some embodiments of this application is to provide an energy storage system. Specific technical solutions are as follows:
This application provides an energy storage system. The energy storage system includes: a plurality of battery modules connected in series, where each battery module includes at least two cell modules and a first cell monitoring unit, and, in each battery module, adjacent cell modules are electrically connected by a busbar, and the busbar is electrically connected to one first cell monitoring unit; a controller, communicatively connected to the first cell monitoring unit; and a shunt resistor, disposed on a main circuit of the energy storage system. The shunt resistor is electrically connected to the controller.

The first cell monitoring unit collects the status information of the busbar, and based on the first status information, determines the current flowing through the battery module. The controller determines, based on the current value, whether the current in the main circuit of the energy storage system is accurate, and diagnoses the current in the main circuit of the energy storage system, thereby improving the safety and reliability of the system.

In one or more embodiments of this application, the battery module includes a first circuit board. The cell modules are electrically connected to the first circuit board. The energy storage system includes a battery monitoring circuit board electrically connected to the first circuit board. The first cell monitoring unit is disposed on the battery monitoring circuit board.

Through the electrical connection between the first circuit board and the battery monitoring circuit board, the electrical connection between the first cell monitoring unit and the cell module is implemented, thereby enabling the first cell monitoring unit to collect the status information of the cell module.

In one or more embodiments of this application, the first circuit board includes a first connector. The first connector is electrically connected to the cell modules. The battery monitoring circuit board includes a second connector. The second connector is electrically connected to the first connector. The second connector is electrically connected to the first cell monitoring unit.

Through the electrical connection of the connector, the electrical connection between the first cell monitoring unit and the cell module is implemented, thereby enabling the first cell monitoring unit to collect the status information of the cell module.

In one or more embodiments of this application, the battery monitoring circuit board includes a first resistor, a second resistor, and a first capacitor. The second connector includes a first terminal and a second terminal. The first cell monitoring unit includes a first pin and a second pin. The first terminal is connected to one end of the busbar. The second terminal is connected to another end of the busbar. The first resistor is electrically connected between the first terminal and the first pin. The second resistor is electrically connected between the second terminal and the second pin. A first end of the first capacitor is electrically connected to the first pin. A second end of the first capacitor is electrically connected to the second pin.

The first resistor, the second resistor, and the first capacitor form an RC filter circuit. Through the first resistor, the second resistor, and the first capacitor, the data collected by the first cell monitoring unit is made more accurate.

In one or more embodiments of this application, the battery monitoring circuit board includes a first inductor and a second inductor. The first inductor is electrically connected between the first resistor and the first terminal. The second inductor is electrically connected between the second resistor and the second terminal.

The inductor disposed can perform filtering for a second time, thereby improving the anti-interference capability of the collection circuit, and increasing the accuracy of the data collected by the first cell monitoring unit.

In one or more embodiments of this application, the battery monitoring circuit board includes at least one second capacitor and at least one third capacitor. A first end of the second capacitor is grounded, and a second end of the second capacitor is electrically connected to a first end of the first inductor. The first end of the first inductor is an end electrically connected to the first resistor. A first end of the third capacitor is grounded, and a second end of the third capacitor is electrically connected to the first end of the second inductor. The first end of the second inductor is an end electrically connected to the second resistor.

The capacitor may be configured to protect the energy storage systems from static electricity and eliminate the static electricity generated around the energy storage system, thereby effectively preventing the static electricity in the circuit or lightning strikes from damaging equipment in the energy storage system.

In one or more embodiments of this application, a first signal transmission line electrically connects the first terminal to the first pin, a second signal transmission line electrically connects the second terminal to the second pin, a third resistor mounting position is disposed between the first signal transmission line and the second signal transmission line, the resistance value of the third resistor is configured to be 0 ohms, so that the first pin and the second pin are not suspended, thereby stabilizing the level, and preventing the first cell monitoring unit from raising false alarms.

In one or more embodiments of this application, the energy storage system includes: an analog-to-digital converter, electrically connected to the shunt resistor. The analog-to-digital converter is communicatively connected to the controller.

With the analog-to-digital converter, the collected analog signal of the shunt resistor is directly converted into a digital signal, thereby improving the current detection precision.

In one or more embodiments of this application, the energy storage system includes: a second cell monitoring unit. The second cell monitoring unit is communicatively connected to the first cell monitoring unit of a first battery module in the plurality of battery modules connected in series and the first cell monitoring unit of a last battery module in the plurality of battery modules connected in series, and the second cell monitoring unit is communicatively connected to the controller. Among the plurality of first cell monitoring units, adjacent first cell monitoring units are communicatively connected to each other. As a two-way communication device, the second cell monitoring unit can implement data transmission when direct communication is disabled between the first cell monitoring unit and the controller.

In one or more embodiments of this application, the first cell monitoring unit is configured to collect the voltage of the busbar. The controller is configured to perform the following operations: determining a current on the main circuit; obtaining a voltage of the busbar sent by the first cell monitoring unit, and calculating a first current based on a resistance of the busbar; and diagnosing the current on the main circuit based on the first current. Mutual calibration is performed based on the current value of the busbar, thereby avoiding the adverse effect of the failure of collection of a single busbar on the voltage sampling, current sampling, and diagnosis, and improving the accuracy of the diagnosis.

Some embodiments of this application brings at least the following beneficial effects: This application provides an energy storage system. The energy storage system includes: a plurality of battery modules connected in series, a controller, and a shunt resistor. Each battery module includes at least two cell modules and at least one first cell monitoring unit. In each battery module, adjacent cell modules are electrically connected by a busbar. At least one busbar is electrically connected to one first cell monitoring unit. The shunt resistor is configured to measure the system current of the energy storage system. The first cell monitoring unit is configured to measure the status information of the busbar. The current value of the busbar can be determined based on the status information of the busbar and a preset busbar resistance value determining manner. The controller can diagnose the system current of the energy storage system based on the current value of the busbar and the system current of the energy storage system, so as to determine whether the collected system current of the energy storage system is accurate.

### BRIEF DESCRIPTION OF DRAWINGS

To describe the technical solutions in some embodiments of this application or the prior art more clearly, the following outlines the drawings to be used in the description of some embodiments of this application or the prior art. Evidently, the drawings outlined below merely illustrate some embodiments of this application, and a person of ordinary skill in the art may derive other embodiments from the drawings.
FIG. 1 is a schematic structural diagram of collecting a system current of an energy storage system in the related art;
FIG. 2 is a first schematic structural diagram of an energy storage system according to an embodiment of this application;
FIG. 3 is a first schematic diagram of busbar voltage collection according to an embodiment of this application;
FIG. 4 is a second schematic diagram of busbar voltage collection according to an embodiment of this application;
FIG. 5 is a third schematic diagram of busbar voltage collection according to an embodiment of this application;
FIG. 6 is a fourth schematic diagram of busbar voltage collection according to an embodiment of this application;
FIG. 7 is a fifth schematic diagram of busbar voltage collection according to an embodiment of this application;
FIG. 8 is a second schematic structural diagram of an energy storage system according to an embodiment of this application; and
FIG. 9 is a third schematic structural diagram of an energy storage system according to an embodiment of this application.

### DETAILED DESCRIPTION

The following describes the technical solutions in some embodiments of this application clearly in detail with reference to the drawings appended hereto. Evidently, the described embodiments are merely a part of but not all of the embodiments of this application. All other embodiments derived by a person of ordinary skill in the art based on the embodiments of this application without making any creative efforts still fall within the protection scope of this application.

An energy storage system is connected to an external device to enable charging and discharging operations. An external device may be an electrical device or a charging device. When the external device is an electrical device, the energy storage system supplies power to the electrical device. When the external device is a charging device, the charging device charges the energy storage system. As an example, the electrical device can be a power-consuming load.

In order to ensure the safety and reliability of the energy storage system, the system current of the energy storage system needs to be collected. A shunt resistor is disposed on a main circuit of the energy storage system. The shunt resistor is connected to a controller. The current on the main circuit is collected by the shunt resistor, so as to obtain the current of the energy storage system. As shown in FIG. 1, a battery module of the energy storage system includes a positive electrode B⁺ and a negative electrode B⁻. The shunt resistor R is disposed in the main circuit of the energy storage system. The system current of the energy storage system may be collected by the shunt resistor. To diagnose whether the current on the main circuit of the energy storage system is accurate, an embodiment of this application provides an energy storage system.

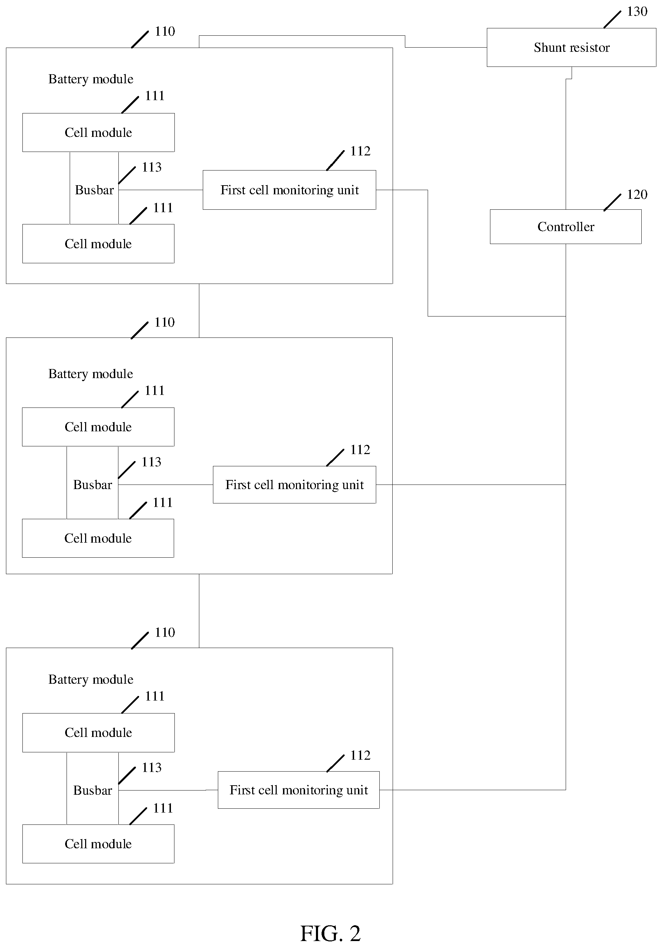

As shown in FIG. 2, the energy storage system includes a plurality of battery modules 110 connected in series, a controller 120, and a shunt resistor 130. The battery module includes at least two cell modules 111 and at least one first cell monitoring unit 112. Adjacent cell modules 111 are connected by a busbar 113.

The cell module includes, but is not limited to, various systems of lithium -ion batteries. For example, a positive electrode material of a lithium-ion battery includes lithium iron phosphate, lithium manganese iron phosphate, lithium manganese oxide, a ternary negative electrode silicon-doped system, lithium nickel cobalt manganese oxide (ternary battery), a hybrid system, or the like. Each battery module includes at least two cell modules. Adjacent cell modules are electrically connected by a busbar. A cell module includes at last one battery cell. When a plurality of battery cells exist, the plurality of battery cells may be connected in series, parallel, or series-and-parallel pattern. The series-and-parallel connection of a plurality of battery cells means that the connection between the battery cells includes both series connection and parallel connection.

When each battery module corresponds to a plurality of busbars, the status information of all busbars may be collected, or the status information of a part of the busbars may be collected. For example, each battery module includes 3 cell modules, and the number of busbars is 2. For this battery module, the first cell monitoring unit may collect the status information of one of the busbars, or collect the status information of 2 busbars.

In some embodiments, each battery module includes a plurality of busbars, and the status information of a plurality of busbars needs to be collected. Each battery module may include 1 or more first cell monitoring units. In other words, when a battery module includes a plurality of busbars, one or more first cell monitoring units may be electrically connected to the busbars depending on the number of pins of the first cell monitoring unit. In a specific implementation, the busbars are copper bars.

The first cell monitoring unit is a device for collecting status information of the busbars. The status information includes voltage, temperature, and the like.

In some embodiments, in each battery module, the first cell monitoring unit of the battery module collects the status information of the busbar to obtain first status information, and transmits the first status information to the controller. Based on the first status information, the controller determines the current that flows through the battery module. In some other embodiments, in each battery module, the first cell monitoring unit of the battery module collects the status information of the busbar to obtain the first status information. Based on the first status information, the first cell monitoring unit calculates the current that flows through the battery module, and transmits the current value to the controller. Based on the current value, the controller determines whether the current on the main circuit of the energy storage system is accurate.

The first cell monitoring unit collects the status information of the busbar, and based on the first status information, determines the current flowing through the battery module. The controller determines, based on the current value, whether the current in the main circuit of the energy storage system is accurate, and diagnoses the current in the main circuit of the energy storage system, thereby improving the safety and reliability of the system.

In addition, the first cell monitoring unit may be a device that comes with the energy storage system and that is configured to collect status information. The first cell monitoring unit can collect other status information that needs to be collected from the energy storage system, and, in a scenario of diagnosing the current on the main circuit of the energy storage system, can collect the status information of the busbar. In this way, with a need to add other additional collection devices, the current in the main circuit of the energy storage system can be diagnosed without affecting the system internal resistance of the energy storage system, thereby improving the safety and reliability of the system.

In some embodiments of this application, the controller calculates a difference between the current flowing through the battery module and the current flowing through the shunt resistor. If the difference falls within a preset difference range, it is determined that the current of the energy storage system is accurate; otherwise, it is determined that the current of the energy storage system is inaccurate. The preset difference range is determined based on actual conditions, and is not limited herein.

In some embodiments of this application, for each busbar, the first cell monitoring unit collects the voltage values at both ends of the busbar, and transmits the collected voltage values to the controller. The controller determines a voltage drop of the busbar based on the voltage values at both ends of the busbar. Based on the resistance value of the busbar, the controller calculates the current that flows through the battery module. In some specific implementations, the first cell monitoring unit collects the voltage of the cell module, and for each busbar, calculates the voltage drop of the busbar based on the voltages of the two cell modules connected to the busbar.

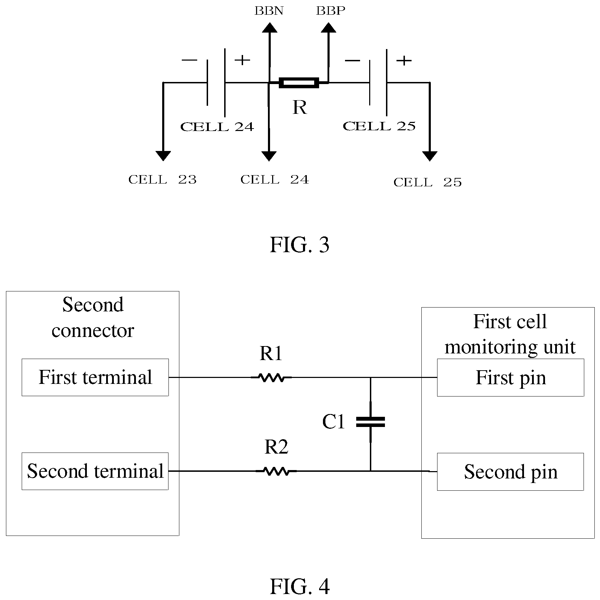

As shown in FIG. 3, the battery module includes a plurality of cell modules. CELL24 is a cell of one cell module, CELL25 is a cell of another cell module, and CELL23 may be a cell of another cell module. The two cell modules are connected in series by a busbar. R represents a busbar that connects CELL24 and CELL25 together. 25^{th} series collected cell voltage = V_{Cell25} - V_{Cell24}. Because the sampling point of the 25^{th} series cell voltage includes the busbar, when the battery module is charged and discharged, the current flows through the busbar, making the collected voltage inconsistent with the actual cell voltage. Therefore, the collected voltage of CELL25 needs to be processed.

As shown in FIG. 3, the voltage drop V_{R} across the busbar R is equal to V_{BBP} - V_{BBN}. During charging, the actual voltage of CELL25 is: V_{Cell} actual cell voltage = 25^{th} series collected voltage - V_{R} (V_{R} ≥ 0). The 25^{th} series collected voltage minus the voltage drop on the busbar arrives at the actual voltage of CELL25. During discharging, the actual voltage of CELL25 is: V_{Cell} actual cell voltage = 25^{th} series collected voltage - V_{R} (V_{R} ≤ 0). The 25^{th} series collected voltage plus the voltage drop on the busbar arrives at the actual voltage of CELL25.

In some embodiments of this application, the resistance of the busbar is pre-stored in the controller. The resistance of the busbar is used as a constant value. In some other embodiments of this application, the resistance value of the busbar is obtained by calculation. In some specific implementations, the first cell monitoring unit collects temperature information of the busbar, and transmits the temperature information of the busbar to the controller. The controller may calculate the resistance of the busbar based on a function of temperature and resistance.

The resistance of the busbar is affected by an ambient temperature. The resistance value of the busbar is determined based on the real-time measured temperature as well as the function of temperature and resistance. With the impact of the temperature on the resistance of the busbar being considered, the calculated resistance of the busbar is more accurate, thereby ensuring the precision of diagnosis.

After determining the voltage drop of the busbar and the resistance of the busbar, the controller can determine the current that flows through the busbar, and then determine the current of the battery module, and then, based on the current of the battery module, determine whether the current of the energy storage system is accurate.

In some embodiments of this application, the resistance value of the busbar is pre-stored in the controller. The status information transmitted by the first cell monitoring unit to the controller includes identification information of the busbar. The controller obtains the resistance of the busbar based on the identification information of the busbar.

In some other embodiments of this application, the resistance of the busbar is calculated based on a functional relationship between the temperature and resistance of the busbar. After obtaining the voltage value sent by the first cell monitoring unit, the controller determines the busbar corresponding to the voltage value. The resistance of the busbar is calculated based on the current temperature of the busbar as well as a preset functional relationship between the temperature and resistance of the busbar.

In a specific embodiment, the energy storage system includes three battery modules: battery module 1, battery module 2, and battery module 3. Each battery module includes two cell modules and one first cell monitoring unit. The cell modules included in the battery module 1 are cell module 1-1 and cell module 1-2. The first cell monitoring unit corresponding to the battery module 1 is a first cell monitoring unit 1. The busbar 1 connects the cell module 1-1 and the cell module 1-2. The cell modules included in the battery module 2 are cell module 2-1 and cell module 2-2. The first cell monitoring unit corresponding to the battery module 2 is a first cell monitoring unit 2. The busbar 2 connects the cell module 2-1 and the cell module 2-2. The cell modules included in the battery module 3 are cell module 3-1 and cell module 3-2. The first cell monitoring unit corresponding to the battery module 3 is a first cell monitoring unit 3. The busbar 3 connects the cell module 3-1 and the cell module 3-2.

The first cell monitoring unit 1 is configured to collect the voltage and temperature of the busbar 1, and transmit the voltage and temperature of the busbar 1 to the controller. After receiving the voltage of the busbar 1, the controller calculates the resistance of the busbar 1 based on the temperature of the busbar 1 and based on the functional relationship between the temperature and resistance of the busbar, and then divides the voltage of the busbar 1 by the resistance of the busbar 1 to obtain the current that flows through the busbar 1.

In some embodiments of this application, as a way of determining the resistance of the busbar, the resistance of the busbar may be calculated by the first cell monitoring unit. After collecting the voltage of the busbar, the first cell monitoring unit further calculates the resistance of the busbar. The resistance of the busbar may be calculated with reference to the above embodiment, and the detailed calculation method is omitted here. The current of the battery module is determined based on the resistance of the busbar and the voltage of the busbar. The current of the battery module is transmitted to the controller. Based on the obtained current of the battery module, the controller determines whether the current of the energy storage system is accurate.

In some embodiments of this application, the battery module includes at least one first circuit board. The energy storage system includes a battery monitoring circuit board. The cell module is electrically connected to the first circuit board. The first cell monitoring unit is disposed on the battery monitoring circuit board. The battery monitoring circuit board is electrically connected to the first circuit board by a harness, or, the battery monitoring circuit board is electrically connected to the first circuit board by a connector and a harness. In some specific implementations, the first circuit board is an adapter board. A connector is disposed on the adapter board. Tabs of the cell are welded to the connector to implement electrical connection between the cell module and the first circuit board.

In some embodiments of this application, the number of cell modules included in one battery module is equal to the number of first circuit boards, and one cell module is electrically connected to one first circuit board. A first connector is disposed on the first circuit board. The tabs of the cells in each cell module are welded onto the first circuit board. The tabs of the cells are electrically connected to the first connector by a printed copper wire on the first circuit board. The battery monitoring circuit board includes a second connector. The second connector is electrically connected to the first cell monitoring unit. The second connector is electrically connected to the first connector by a communication harness. The electrical connection between the first cell monitoring unit and the cell module is implemented by the electrical connection between the two connectors, thereby enabling the first cell monitoring unit to collect the status information of the cell module.

As shown in FIG. 4, in some embodiments of this application, the battery monitoring circuit board is provided with a first resistor R1, a second resistor R2, and a first capacitor C1. The second connector includes a first terminal and a second terminal. The first cell monitoring unit includes a first pin and a second pin. The first resistor R1 is electrically connected between the first terminal and the first pin. The second resistor R2 is electrically connected between the second terminal and the second pin. A first end of the first capacitor C1 is electrically connected to the first pin. A second end of the first capacitor C1 is electrically connected to the second pin.

The first resistor R1, the second resistor R2, and the first capacitor C1 form an RC filter circuit. Through the first resistor R1, the second resistor R2, and the first capacitor C1, the data collected by the first cell monitoring unit is made more accurate.

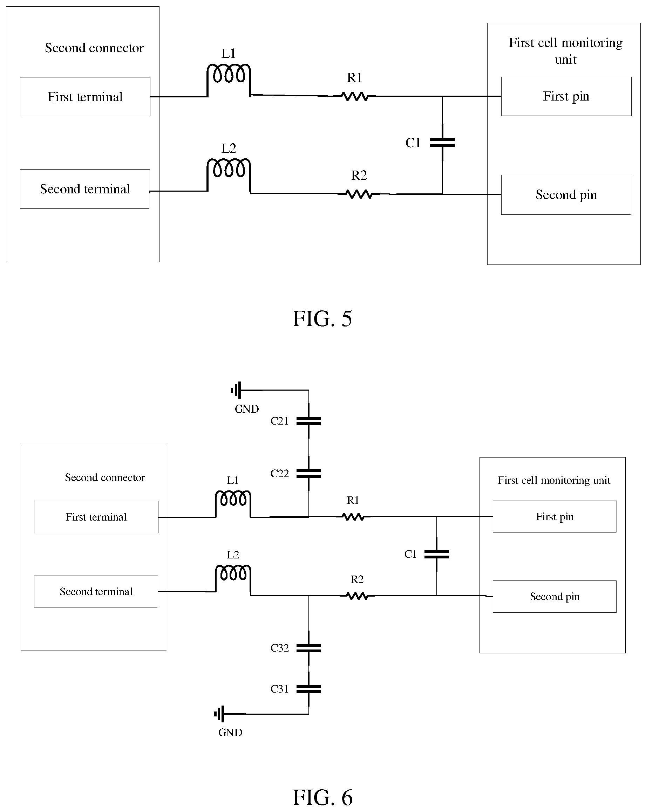

Based on the embodiment shown in FIG. 4, as shown in FIG. 5, in some embodiments of this application, the battery monitoring circuit board includes a first inductor L1 and a second inductor L2. The first inductor L1 is electrically connected between the first resistor R1 and the first terminal. The second inductor L2 is electrically connected between the second resistor R2 and the second terminal. The inductor disposed can improve the anti-interference capability of the collection circuit, and increase the accuracy of the data collected by the first cell monitoring unit.

In some embodiments of this application, the battery monitoring circuit board includes at least one second capacitor and at least one third capacitor. A first end of the second capacitor is grounded, a second end of the second capacitor is electrically connected to a first end of a first inductor L1, and the first end of the first inductor L1 is an end electrically connected to the first resistor R1. A first end of the third capacitor is grounded, a second end of the third capacitor is electrically connected to a first end of a second inductor L2, and the first end of the second inductor L2 is an end electrically connected to the second resistor R2.

Static electricity is generated when the connector is plugged in or out. If electrostatic protection is implemented, as shown in FIG. 6, the second capacitor includes a capacitor C21 and a capacitor C22. The third capacitor includes a capacitor C31 and a capacitor C32. The second capacitor and the third capacitor may be configured to protect the energy storage systems from static electricity and eliminate the static electricity generated around the energy storage system, thereby effectively preventing the static electricity in the circuit from damaging equipment in the energy storage system. In the drawing, GND represents a ground signal.

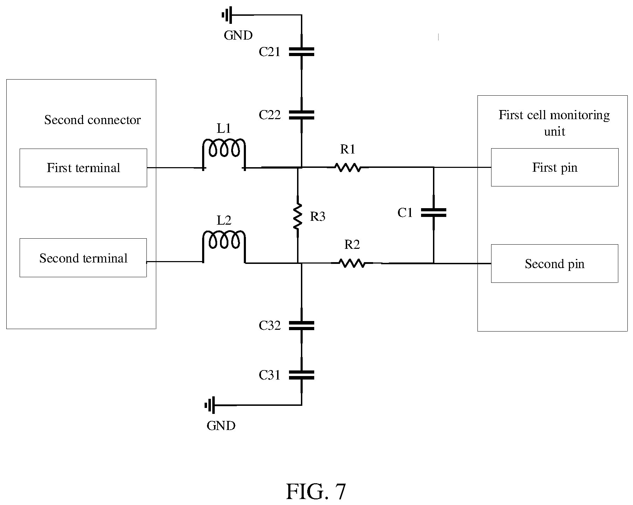

In some embodiments of this application, as shown in FIG. 7, a third resistor R3 is further disposed on the battery monitoring circuit board. When the busbar fails or does not exist, that is, when there is no need to collect the status information of the busbar, a first end of the third resistor R3 may be connected to the first pin. A second end of the third resistor R3 is electrically connected to the second pin. The third resistor short-circuits the first pin and the second pin so that the first pin and the second pin are not suspended, thereby stabilizing the level, and preventing the first cell monitoring unit from raising false alarms. The resistance of the third resistor R3 is less than a preset resistance value. Understandably, the preset resistance value is a resistance value small enough to make the first pin and the second pin of the first cell monitoring unit stay in a short-circuited state. In a specific implementation, the resistance value of R3 is 0 Ω.

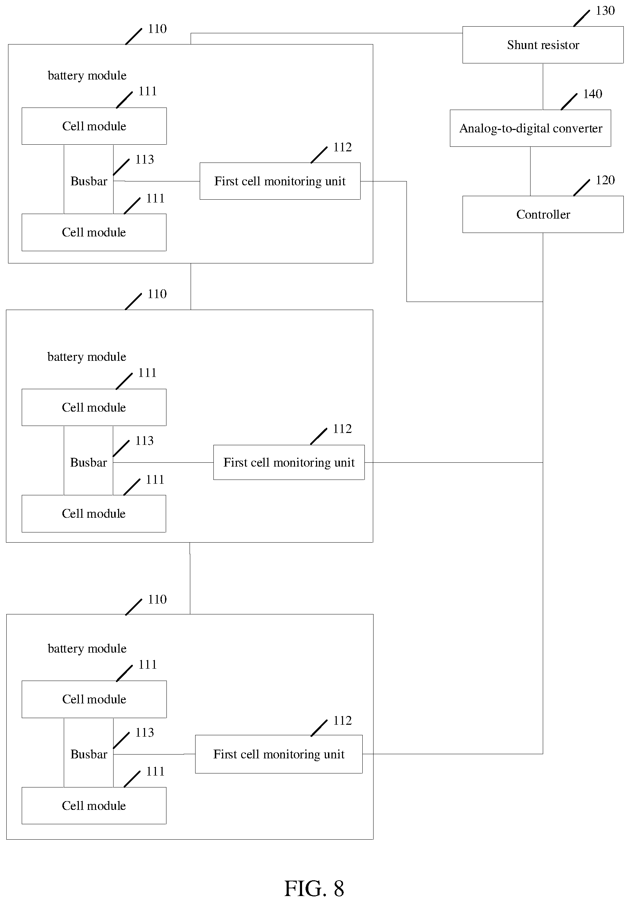

As shown in FIG. 8, in some embodiments of this application, the energy storage system further includes an analog-to-digital converter 140. The analog-to-digital converter is electrically connected to the shunt resistor. The analog-to-digital converter is communicatively connected to the controller. The analog-to-digital converter converts the collected signal of the shunt resistor into a digital signal from an analog signal, and sends the digital signal to the controller. With the analog-to-digital converter, the collected analog signal of the shunt resistor is directly converted into a digital signal, thereby improving the current detection precision.

In some embodiments of this application, if the first cell monitoring unit is unable to communicate with the controller due to a fault or other reasons, a two-way communication device is disposed as a second cell monitoring unit between the first cell monitoring unit and the controller to communicate with both the first cell monitoring unit and the controller.

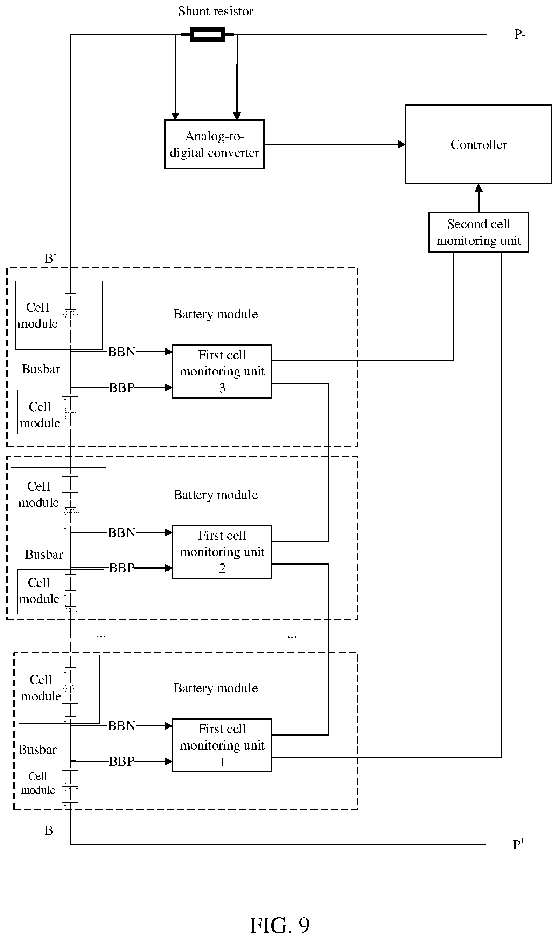

As shown in FIG. 9, B⁺ is a positive electrode of the energy storage system, B⁻ is a negative electrode of the energy storage system, and an external device is connected between P⁺ and P⁻. The second cell monitoring unit is electrically connected to a first one of the first cell monitoring units and a last one of the first cell monitoring units. The second cell monitoring unit is communicatively connected to the controller. The information collected by the first cell monitoring unit is transmitted to the second cell monitoring unit. The second cell monitoring unit communicates with the controller. As a two-way communication device, the second cell monitoring unit can implement data transmission when the first cell monitoring unit is faulty and unable to communicate with the controller. For example, if the first cell monitoring unit 2 in FIG. 9 is faulty, the first cell monitoring unit 1 communicates with the second cell monitoring unit through the "lower" communication line. The first cell monitoring unit 3 communicates with the second cell monitoring unit through the "upper" communication line, so that the status information of the busbar is transmitted to the controller through the second cell monitoring unit separately.

In some embodiments of this application, the controller determines working status of each busbar based on the determined voltage of each busbar. The working status includes a normal working state and an abnormal working state. Because the battery modules are connected in series, the current values passing through the busbars are equal. Based on the voltage of each busbar and the resistance of the busbar, it is determined whether each busbar is working normally.

As an example, for each busbar, the current value passing through the busbar is calculated based on the voltage and resistance of the busbar, and the working status of the busbar is determined based on the current value of each busbar. It is determined whether the current value of each busbar is within the current range. If so, it is determined that each busbar is working normally. In other words, the current value determined based on the busbar is accurate. Based on the current value, it can be determined whether the current of the energy storage system is accurate, thereby improving the accuracy of diagnosis. If a current value of a busbar is not within the current range, it is determined that the busbar is working abnormally, and the accuracy of the current of the energy storage system is diagnosed based on the current values of other busbars that are working normally.

In an example, it is determined whether the current values of all busbars are the same. If the current values are the same, it is determined that all the busbars are working normally. If the current values are not the same, the current values of the busbars are classified. The same current values are classified into one category, and the current value of the category corresponding to the largest number of busbars is used as a current value for diagnosing the current of the energy storage system. Mutual calibration is performed based on the current value of the busbar, thereby avoiding the adverse effect of the failure of collection of a single busbar on the voltage sampling, current sampling, and diagnosis, and improving the accuracy of the diagnosis.

The foregoing embodiments may be implemented fully or partially by software, hardware, firmware, or any combination thereof. When implemented by software, the embodiment may be fully or partially implemented in the form of a computer program product. The computer program product includes one or more computer instructions. When the computer program instructions are loaded and executed on the computer, the processes or functions described in the embodiments of this application are implemented in full or in part. The computer may be a general-purpose computer, a dedicated computer, a computer network, or other programmable devices. The computer instructions may be stored in a computer-readable storage medium or transmitted from one computer-readable storage medium to another. For example, the computer instructions may be transmitted from a website, computer, server, or data center to another website, computer, server, or data center in a wired (such as a coaxial cable, optical fiber, or digital subscriber line (DSL)) or wireless (such as infrared, radio, or microwave) manner. The computer-readable storage medium may be any available medium accessible to a computer, or a data storage device such as a server or data center that integrates one or more available media. The available media may be a magnetic medium (such as a floppy disk, a hard disk, or a magnetic tape), an optical medium (such as a DVD), or a semiconductor medium (such as a solid state disk (SSD)).

It is hereby noted that the relational terms herein such as "first" and "second" are used merely to differentiate one entity or operation from another, but do not involve or imply any actual relationship or sequence between the entities or operations. Moreover, the terms "include", "comprise", and any variation thereof are intended to cover a non-exclusive inclusion relationship by which a process, method, object, or device that includes or comprises a series of elements not only includes such elements, but also includes other elements not expressly specified or also includes inherent elements of the process, method, object, or device. Unless otherwise specified in the context, reference to a process, method, object, or device that "includes" or "comprises" a specific number of elements does not exclude other identical or equivalent elements existent in the process, method, object, or device.

Different embodiments of this application are described in a correlative manner. For the same or similar part in one embodiment, reference may be made to another embodiment. Each embodiment focuses on differences from other embodiments.

What is described above is merely preferred embodiments of this application, but not intended to limit the protection scope of this application. Any modifications, equivalent replacements, improvements, and the like made without departing from the spirit and principles of this application still fall within the protection scope of this application.

## Claims

1. An energy storage system, **characterized in that**, the energy storage system comprises:
a plurality of battery modules (110) connected in series, wherein each battery module comprises two cell modules (111) and a first cell monitoring unit (112); in each battery module, adjacent cell modules are electrically connected by a busbar (113); and the busbar is electrically connected to the first cell monitoring unit;
a controller (120), communicatively connected to the first cell monitoring unit; and
a shunt resistor (130), disposed on a main circuit of the energy storage system, wherein the shunt resistor is electrically connected to the controller.

2. The energy storage system according to claim 1, **characterized in that** the battery module comprises:
a first circuit board, wherein the cell modules are electrically connected to the first circuit board; and
the energy storage system comprises a battery monitoring circuit board electrically connected to the first circuit board, and the first cell monitoring unit is disposed on the battery monitoring circuit board.

3. The energy storage system according to claim 2, **characterized in that**
the first circuit board comprises a first connector, and the first connector is electrically connected to the cell modules;
the battery monitoring circuit board comprises a second connector, the second connector is electrically connected to the first connector, and the second connector is electrically connected to the first cell monitoring unit.

4. The energy storage system according to claim 3, **characterized in that**
the battery monitoring circuit board comprises a first resistor (R1), a second resistor (R2), and a first capacitor (C1);
the second connector comprises a first terminal and a second terminal, the first cell monitoring unit comprises a first pin and a second pin, the first terminal is connected to one end of the busbar, and the second terminal is connected to another end of the busbar; and
the first resistor is electrically connected between the first terminal and the first pin, the second resistor is electrically connected between the second terminal and the second pin, a first end of the first capacitor is electrically connected to the first pin, and a second end of the first capacitor is electrically connected to the second pin.

5. The energy storage system according to claim 4, **characterized in that** the battery monitoring circuit board comprises a first inductor (L1) and a second inductor (L2);
the first inductor is electrically connected between the first resistor and the first terminal; and
the second inductor is electrically connected between the second resistor and the second terminal.

6. The energy storage system according to claim 5, **characterized in that** the battery monitoring circuit board comprises at least one second capacitor (C21, C22) and at least one third capacitor (C31, C32);
a first end of the second capacitor is grounded, a second end of the second capacitor is electrically connected to a first end of the first inductor, and the first end of the first inductor is an end electrically connected to the first resistor; and
a first end of the third capacitor is grounded, a second end of the third capacitor is electrically connected to a first end of the second inductor, and the first end of the second inductor is an end electrically connected to the second resistor.

7. The energy storage system according to any one of claims 4 to 6, **characterized in that** a first signal transmission line electrically connects the first terminal to the first pin;
a second signal transmission line electrically connects the second terminal to the second pin;
a third resistor (R3) mounting position is disposed between the first signal transmission line and the second signal transmission line;
wherein, a resistance value of the third resistor is configured to be 0 ohms.

8. The energy storage system according to claim 1 or 2, **characterized in that** the energy storage system comprises:
an analog-to-digital converter (140), electrically connected to the shunt resistor, wherein the analog-to-digital converter is communicatively connected to the controller.

9. The energy storage system according to any one of claims 1 to 8, **characterized in that** the energy storage system comprises:
a second cell monitoring unit, wherein the second cell monitoring unit is communicatively connected to the first cell monitoring unit of a first battery module in the plurality of battery modules (110) connected in series and the first cell monitoring unit of a last battery module in the plurality of battery modules (110) connected in series, and the second cell monitoring unit is communicatively connected to the controller; and
adjacent first cell monitoring units are communicatively connected to each other.

10. The energy storage system according to any one of claims 1 to 9, **characterized in that** the first cell monitoring unit is configured to collect a voltage of the busbar; and
the controller is configured to perform the following operations:
determining a current on the main circuit;
obtaining a voltage of the busbar sent by the first cell monitoring unit, and calculating a first current based on a resistance of the busbar; and
diagnosing the current on the main circuit based on the first current.
